# EUROPEAN PATENT SPECIFICATION

(11) **EP 1 704 784 B1**
(45) Date of publication and mention of the grant of the patent: **19.08.2009**
(21) Application number: 05425176.4
(22) Date of filing: 25.03.2005
(51) Int. Cl.: A23P 1/08, A23L 1/39, A23L 1/238, A23L 1/24, A23L 1/064, A23L 3/36

(54) **Method for the production of frozen fluid food products**
Verfahren zur Hestellung von gefrorenen flüssigen Nahrungsmitteln
Procédé pour la production des produits alimentaires liquides congelés

(43) Date of publication of application: 27.09.2006
(73) Proprietor: Barilla G. e R. Fratelli S.p.A., 43100 Parma (IT)
(72) Inventor: Caselli, Oreste, 42021 Bibbiano (Reggio Emilia) (IT); Loschi, Marco, 43010 Vigatto (Parma) (IT)
(74) Representative: Ferreccio, Rinaldo

(56) References cited:
- EP-A- 0 835 615
- EP-A- 0 983 729
- EP-A- 1 121 867
- US-A- 4 929 456
- PATENT ABSTRACTS OF JAPAN vol. 1998, no. 03, 27 February 1998 (1998-02-27) & JP 09 285278 A (EBARA SHOKUHIN KOGYO KK), 4 November 1997 (1997-11-04)
- PATENT ABSTRACTS OF JAPAN vol. 1999, no. 01, 29 January 1999 (1999-01-29) & JP 10 276735 A (NITTO BEST KK), 20 October 1998 (1998-10-20)

## Description

### Field of application

The present invention generally relates to the field of the food industry. In particular, the invention relates to a method for the production of food products that are fluid, deep-frozen and portioned.

### Prior art

Deep-frozen food products have long been available on the market, in the form of first courses or also dishes comprising a base food, which can be pasta, rice, meat, fish, etc., accompanied by a dip or a sauce. The dip or sauce is conveniently present in small portions, in the form of pellets or plates or drops, which have the advantage of rapidly thawing out when the food product is heated in a pan or in the traditional or microwave oven.

For the production of deep-frozen dips or sauces in small portions, various methods are known, the most widely used of which includes the deposition of the sauce to be frozen on a chilled, conveyor belt of a freezer, for example a freezing tunnel.

The sauce is deposited in the form of a layer of uniform thickness on the chilled belt and is frozen, obtaining in the end a layer of frozen sauce, which is then subjected to a cutting step to obtain a plurality of small plate-shaped portions.

This method is not however free from drawbacks, the most important being the difficulty in detaching the end frozen portions from the conveyor belt, which makes it necessary to resort to scraping devices. Product residues, in particular oil or fat, remain however stuck onto the belt, which must thus be accurately cleaned before a subsequent sauce deposition.

This inconvenience also occurs when the sauce is deposited on the chilled belt in small drop-shaped portions, which are then completely frozen in the freezing tunnel.

To overcome this drawback, application WO 01/54513 has suggested an equipment for the continuous freezing of liquids and the cutting of the frozen material into discrete pieces, wherein a plastic transfer mobile film is used interposed between the chilling surface and the deposited liquid. The film in question certainly helps the detachment of the frozen product but, because of its insulating character, it causes a decrease in the thermal exchange efficiency and moreover, being disposable, it determines the production of a large amount of non biodegradable wastes.

To avoid the problem of the difficulty in detaching the frozen product, other solutions suggested in the prior art (EP 835 615) include only partially freezing the sauce deposited on the chilling belt, to increase its viscosity and allow, by means of another piece of equipment, the moulding into pellets, which are finally frozen. It is, however, obvious that in this case the overall method is more complicated, as it requires more steps and more machinery.

European patent application EP 983 729 to Air Liquide describes a method for the freezing of frozen goods which comprises the steps of hard-freezing the surface of the goods by transporting the goods on a conveyor band impregnated with liquid nitrogen while they are simultaneously frosted by being sprayed with liquid nitrogen, and of storing the goods thus obtained in a freezing chamber until the interior of the goods is also hard-frozen, the method also including the goods being dipped at least partially in an accessory trough filled with liquid nitrogen.

Finally, a drawback shared by all the frozen sauce portions obtained with the above-mentioned methods lies in the fact that, although kept at suitably low temperatures, they tend to stick and adhere to one another, especially those stocked in the bottom of big containers.

### Summary of the invention

The problem underlying the present invention was therefore that of providing a method for the production of a food product of fluid consistency, such as for example a dip or a sauce, in discrete pieces, which overcomes the drawbacks highlighted above with reference to the prior art.

Such a problem has been solved, according to the invention, by a method comprising the steps of:
nebulizing water or a saline aqueous solution on a freezing surface to form a thin and even ice layer on such surface;
depositing a food product of fluid consistency on the above-mentioned ice layer and
freezing the above-mentioned product.

The above-mentioned product of fluid consistency can be deposited on the above-mentioned surface in the form of a layer of uniform thickness and in such case the method according to the present invention comprises the further step of partitioning the frozen product obtained into pieces by means of a cutting step.

Alternatively, the food product of fluid consistency is deposited on the ice layer in the form of discrete portions.

Optionally, water or a saline aqueous solution is nebulized also on the exposed surface of the product so as to form an ice layer also on such surface.

The temperature of the freezing surface is preferably comprised between -10°C and -100°C and conveniently between -20°C and -40°C.

Such freezing surface is preferably that of a conveyor belt of a freezing plant.

The above-mentioned saline solution preferably consists of a sodium chloride solution having a concentration comprised between 1 and 26% w/v.

The nebulization of water or saline solution on the exposed surface of the product is carried out after such surface has been chilled to a temperature of -5°C or lower.

The method of the invention produces an ice layer having a thickness of at least 0,2 mm, preferably comprised between 0,3 and 1 mm.

It has been surprisingly found that the thin ice layer formed on the freezing surface greatly helps the final detachment of the discrete frozen product pieces, as it adheres to the pieces themselves and not to the freezing surface, leaving the latter perfectly clean and ready for a subsequent working cycle.

This helps avoid resorting to plastic films like those used in the prior art and all the problems associated with such use.

Even when the deposition of the fluid product on the ice layer is carried out in the form of discrete portions, the latter, once frozen, are easily detached, together with the ice which adheres to their lower surface, from the conveyor belt, for example by means of suitable scraping means. The ice interposed between the various portions of frozen product is also detached with the aid of scraping means and separated from the portions of frozen product by means of simple winnowing means.

The method according to the present invention can be carried out using widely available equipment, without having to resort to extrusion or pellet moulding steps prior to the final freezing.

Moreover, the product, in the form of plate-shaped pieces or flattened drops, obtained at the end of the method exhibits on at least one of its surfaces an ice layer, which can also be defined a "glazing", which makes the pieces remain well detached from one another even after large bulk storage. Such protection against the adhering or sticking of the various pieces is further enhanced when the ice layer occurs on both the surfaces of the plate-shaped frozen product pieces.

The food product of fluid consistency subjected to the method according to the present invention is preferably a sauce.

The discrete pieces of frozen sauce provided with an ice layer on at least one of their surfaces are a further object of the present invention.

The present invention will be further described with reference to two examples provided hereafter for illustrative purposes.

### EXAMPLE 1

A tomato sauce was prepared, with conventional methods known in the field, containing the following ingredients:

| | |
|---|---|
| Tomato pulp | 80% |
| Onion | 8% |
| Olive oil | 10% |
| Salt and spices | 2% |

The sauce thus prepared was subjected to freezing in the following way.

On the conveyor belt of a freezing plant, chilled to -30°C, water was nebulized in such an amount as to form, on the chilled surface of the belt, an ice layer about 0,5 mm thick.

At this point, on the ice layer formed on the belt, the tomato sauce was deposited in such a way as to form an even layer about 10 mm thick.

The belt was then sent into a freezing tunnel at a temperature of about -40°C. As the belt came out from the tunnel, the frozen product thus obtained was cut so as to obtain rectangular plates of frozen sauce having dimensions of about 3x2 cm. The plates were easily detached from the belt, leaving the latter perfectly clean.

Each plate of frozen sauce exhibited an ice layer on one of its surfaces.

### EXAMPLE 2

The same tomato sauce as per the example 1 was subjected to freezing in the following way.

On the same conveyor belt mentioned in the example 1, chilled to - 35°C, water was nebulized in such an amount as to form, on the chilled surface of the belt, an ice layer about 0,5 mm thick.

At this point, on the ice layer formed on the belt, the tomato sauce was deposited so as to form an even layer 8 mm thick.

After a residence time of the sauce layer on the belt chilled to -35°C of about 3 minutes, solidification of the exposed surface of the sauce layer was achieved. At this point water was nebulized on such exposed surface, having a temperature of -7°C, in such an amount as to obtain the formation of an ice layer having a thickness of 0,5 mm.

The ice generally forms spontaneously as a consequence of the low temperature of the sauce layer's exposed surface; if the ice formation is insufficient or too slow, it can be sped up by flushing the sauce layer with a current of air at low temperature (for example -40°C).

The belt was then sent into a deep-freezing tunnel at a temperature of about -45°C. As the belt came out from the tunnel, the deep-frozen product thus obtained was cut so as to obtain rectangular plates of frozen sauce having dimensions of about 3x2 cm. The plates were easily detached from the belt, leaving the latter perfectly clean.

Each plate of frozen sauce exhibited an ice layer on both its surfaces.

## Claims

1. Method for the freezing of a food product of fluid consistency and the production of discrete pieces of said frozen product, comprising the steps of:
a) nebulizing water or a saline aqueous solution on a freezing surface to form a thin and even ice layer on said surface;
b) depositing a food product of fluid consistency on said ice layer and
c) freezing said product.

2. Method according to claim 1, wherein said food product of fluid consistency is deposited on said ice layer in the form of an even layer, comprising the further step d) of partitioning the frozen product into discrete pieces by means of a cutting step.

3. Method according to claim 1, wherein said food product of fluid consistency is deposited on said ice layer in the form of discrete portions.

4. Method according to any one of the preceding claims, wherein water or a saline aqueous solution is nebulized also on the exposed surface of said product so as to form an ice layer also on said surface.

5. Method according to any one of the preceding claims, wherein the temperature of said freezing surface is comprised between -10°C and - 100°C, preferably between -20°C and -40°C.

6. Method according to any one of the preceding claims, wherein said freezing surface is the surface of a conveyor belt of a deep-freezing plant.

7. Method according to any one of the preceding claims, wherein said saline solution consists of a sodium chloride solution of concentration comprised between 1 and 26% w/v.

8. Method according to claim 4, wherein the nebulization of water or saline solution on the exposed surface of the product is carried out after such surface has been chilled to at least -5°C.

9. Method according to any one of the preceding claims, wherein said food product of fluid consistency is a sauce.

10. Frozen sauce in the form of plate-shaped discrete pieces, **characterised in that** said plate-shaped pieces exhibit a thin ice layer on at least one of their surfaces.

11. Frozen sauce according to claim 10, wherein said ice layer occurs on both the surfaces of the plate-shaped pieces.

12. Frozen sauce according to any one of claims 10 and 11, wherein said ice layer has a thickness of at least 0.2 mm.

13. Frozen sauce according to claim 12, wherein said ice layer has a thickness comprised between 0.3 and 1 mm.

## Patentansprüche

1. Verfahren zum Einfrieren eines Lebensmittelproduktes mit einer flüssigen Konsistenz und der Produktion von einzelnen Stücken des gefrorenen Produktes umfassend die Schritte:
a) Zerstäuben von Wasser oder einer wässrigen Salzlösung auf einer Gefrierfläche, um eine dünne und gleichmäßige Eisschicht auf der Fläche auszubilden;
b) Ablagern eines Nahrungsmittelproduktes mit flüssiger Konsistenz auf der Eisschicht und
c) Frieren des Produktes.

2. Verfahren nach Anspruch 1, indem das Nahrungsmittelprodukt mit flüssiger Konsistenz auf der Eisschicht in Gestalt einer gleichmäßigen Schicht abgelagert wird, ferner umfassend den Schritt d) des Aufteilens des gefrorenen Produktes in separate Teile mittels eines Schneidmittels.

3. Verfahren nach Anspruch 1, indem das Nahrungsmittelprodukt mit flüssiger Konsistenz in Form von einzelnen Bereichen auf der Eisschicht abgelagert wird.

4. Verfahren nach irgendeinem der vorhergehenden Ansprüche, indem Wasser oder eine wässrige Salzlösung auch auf die exponierten Oberfläche des Produktes vernebelt wird, um auch auf dieser Oberfläche eine Eisschicht auszubilden.

5. Verfahren nach irgendeinem der vorhergehenden Ansprüche, indem die Temperatur der Gefrierfläche zwischen -10°C und -100°C, vorteilhafterweise zwischen -20°C und -40°C liegt.

6. Verfahren nach irgendeinem der vorhergehenden Ansprüche, indem die Gefrierfläche die Oberfläche eines Förderbandes einer Tiefkühlanlage ist.

7. Verfahren nach irgendeinem der vorhergehenden Ansprüche, indem die wässrige Salzlösung aus einer Natriumchloridlösung mit einer Konzentration zwischen 1 und 26% Gewicht/Volumen besteht.

8. Verfahren nach Anspruch 4, indem das Vernebeln des Wassers oder der wässrigen Salzlösung auf der exponierten Oberfläche des Produktes durchgeführt wird, nachdem die Oberfläche auf mindestens -5°C gekühlt worden ist.

9. Verfahren nach einem der vorhergehenden Ansprüche, indem das Nahrungsmittelprodukt mit flüssiger Konsistenz eine Soße ist.

10. Gefrorene Soße in Form von plattenförmigen Teilen, **dadurch gekennzeichnet, dass** die plattenförmigen Teile auf mindestens eine ihrer Oberflächen eine dünne Eisschicht aufweisen.

11. Gefrorene Soße nach Anspruch 10, in der die Eisschicht auf beiden Oberflächen der plattenförmigen Teile auftritt.

12. Gefrorene Soße nach irgendeinem der Ansprüche 10 und 11, in der Eisschicht eine Dicke von mindestens 0,2 mm aufweist.

13. Gefrorene Soße nach Anspruch 12, in der die Eisschicht eine Dicke zwischen 0,3 und 1 mm aufweist.

## Revendications

1. Méthode de congélation d'un produit alimentaire de consistance fluide et la production de morceaux discrets du dit produit congelé, comprenant les étapes de :
a) nébulisation de l'eau ou d'une solution aqueuse saline sur une surface de congélation pour former une couche fine et égale de glace sur la dite surface,
b) dépôt d'un produit alimentaire de consistance fluide sur la dite couche de glace et
c) congélation du dit produit.

2. Méthode selon la revendication 1, **caractérisée en ce que** le dit produit alimentaire de consistance fluide est déposé sur la dite couche de glace sous forme de couche égale, comprenant l'étape supplémentaire d) de partition du produit congelé en morceaux discrets au moyen d'une étape de découpage.

3. Méthode selon la revendication 1, **caractérisée en ce que** le dit produit alimentaire de consistance fluide est déposé sur la dite couche de glace sous forme de morceaux discrets.

4. Méthode selon l'une quelconque des revendications précédentes, **caractérisée en ce que** l'eau ou la solution saline aqueuse est aussi nébulisée sur la surface exposée du dit produit de façon à aussi former une couche de glace sur la dite surface.

5. Méthode selon l'une quelconque des revendications précédentes, **caractérisée en ce que** la température de la dite surface de congélation est comprise entre -10°C et -100°C, de préférence entre -20°C et -40°C.

6. Méthode selon l'une quelconque des revendications précédentes, **caractérisée en ce que** la dite surface de congélation est la surface d'un tapis roulant d'une usine de surgélation.

7. Méthode selon l'une quelconque des revendications précédentes, **caractérisée en ce que** la dite solution saline est composée d'une solution de chlorure de sodium à une concentration comprise entre 1 et 26% w/v.

8. Méthode selon la revendication 4, **caractérisée en ce que** la nébulisation de l'eau ou de la solution saline sur la surface du produit est réalisée après que cette surface ait été refroidie à au moins -5°C.

9. Méthode selon l'une quelconque des revendications précédentes, **caractérisée en ce que** le dit produit alimentaire de consistance fluide est une sauce.

10. Sauce congelée sous forme de morceaux discrets de forme aplatie, **caractérisée en ce que** les dits morceaux de forme aplatie présentent une fine couche de glace sur au moins une de leurs surfaces.

11. Sauce congelée selon la revendication 10, **caractérisée en ce que** la dite couche de glace est présente sur les deux surfaces des morceaux de forme aplatie.

12. Sauce congelée selon l'une quelconque des revendication 10 et 11, **caractérisée en ce que** la dite couche de glace a une épaisseur d'au moins 0,2 mm.

13. Sauce congelée selon la revendication 12, **caractérisée en ce que** la dite couche de glace a une épaisseur comprise entre 0,3 et 1 mm.
